(19) Europäisches Patentamt

European Patent Office

Office européen des brevets

(11) **EP 2 555 154 A1**

(12) **EUROPEAN PATENT APPLICATION**

(43) Date of publication:
**06.02.2013 Bulletin 2013/06**

(51) Int Cl.:
*G06Q 50/06* (2012.01)    *G06Q 10/06* (2012.01)

(21) Application number: **12178336.9**

(22) Date of filing: **27.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.08.2011 US 201113197008**

(71) Applicant: **General Electric Company**
**Schenectady, NY 12345 (US)**

(72) Inventors:
• **Mannar, Kamal**
  **309494 Esquire (SG)**
• **Vittal, Sameer**
  **Atlanta, GA 30339 (US)**

(74) Representative: **Bedford, Grant Richard**
**Global Patent Operation - Europe**
**GE International Inc.**
**15 John Adam Street**
**London WC2N 6LU (GB)**

(54) **Risk management system for use with service agreements**

(57)    A system (400) for use with a risk management system (300) is provided. The system includes a memory device (209) configured to store data including at least historical service records (406) of at least one wind turbine (100) and new service records (420) of the at least one wind turbine and a processor unit (211) coupled to the memory device. The processor unit includes a programmable hardware component that is programmed. The processor unit is configured to analyze, by a processing system (402), text of the historical service records to generate a prediction model (410) including a plurality of failure categories; and analyze, by a monitoring system (404), text of the new service records to classify each new service record based on the prediction model.

FIG. 5

## Description

The embodiments described herein relate generally to a risk management system and, more particularly, to a risk management system for wind turbine warrantees and/or service agreements.

At least some known costs of generating energy from the wind using wind turbines include fixed capital expenses (CAPEX) and operating expenses (OPEX). The OPEX component is critical in determining the profitability of a farm or a fleet of wind turbines, as unplanned maintenance events can drive costs and downtime to a point where the wind farm becomes economically unsustainable. As a result, customers and developers often require that the original equipment manufacturer (OEM) of the wind turbine provide an extended warranty and/or a service agreement. As such, the OEM assumes costs of planned and unplanned maintenance activities in exchange for a prenegotiated fee. These maintenance costs could be due to, for example, equipment wear-and-tear from usage, sudden transient events, manufacturing or quality issues, and/or a combination of repairs and inspections, which can add significant costs when repeated over a period of time. For the OEM, the challenge is to accurately estimate the costs and risks of these warranties and agreements. However, the OEMs often use limited or short-term data to forecast maintenance costs and events that are likely to occur over an extended operating period.

Although warranty analysis and/or risk analysis are known, such known analyses do not cover conditions unique to wind turbines. Further, statistical models to predict the risk and life of engineering equipment are known. For example, many commercial software programs have proprietary implementations of known statistical algorithms. The actuarial community has also been working on the problem of predicting the long-term costs of engineering equipment and have produced known actuarial methods.

Known actuarial engineering methods use a combination of engineering, operations research, and actuarial science techniques to model long term service agreements, but such articles discussing actuarial engineering have omitted mathematical details. Additionally, published articles have discussed modeling extended warranties using probabilistic design based on known methods, analyzing performance and reliability of wind turbines using system transport theory, and methods for combining sensors alarms with reliability data. However, these articles did not extend to financial engineering. Furthermore, published papers on wind turbine reliability have an applied focus. For example, these published papers mainly focus on examples where industry-standard reliability analysis techniques, such as Weibull analysis, are applied to failure data. These articles and papers have not focused on the fusion of reliability analysis methods with condition monitoring and financial/actuarial risk models. However, at least one known condition monitoring system fuses reliability and historical field data with operational information.

In one aspect accordingly to the present invention, a system for use with a risk management system is provided. The system includes a memory device configured to store data including at least historical service records of at least one wind turbine and new service records of the at least one wind turbine and a processor unit coupled to the memory device. The processor unit includes a programmable hardware component that is programmed. The processor unit is configured to analyze, by a processing system, text of the historical service records to generate a prediction model including a plurality of failure categories; and analyze, by a monitoring system, text of the new service records to classify each new service record based on the prediction model.

In another aspect, a method for use with a risk management system is provided. The method includes analyzing, by a processing system, text of historical service records of at least one wind turbine using a system; generating, by the processing system, a prediction model of the system based on the analysis of the text, wherein the prediction model includes a plurality of failure categories; analyzing, by a monitoring system, text of new service records of the at least one wind turbine; and classifying, by the monitoring system, each new service record based on the text analysis of the new service records and the prediction model.

Figs. 1-14 show exemplary embodiments of the systems and methods described herein.

Fig. 1 is a schematic view of an exemplary wind turbine.

Fig. 2 is a partial sectional view of an exemplary nacelle used with the wind turbine shown in Fig. 1.

Fig. 3 is a simplified block diagram of an exemplary computer system that may be used with the wind turbine shown in Fig. 1.

Fig. 4 is an expanded block diagram of an exemplary embodiment of a server architecture that may be used with the computer system shown in Fig. 3.

Fig. 5 is a schematic full-service agreement (FSA) system that may be implemented using the system shown in Figs. 3 and 4.

Fig. 6 is a schematic diagram of an exemplary text-mining system for use with the FSA system shown in Fig. 5.

Fig. 7 is a flowchart of an exemplary classification method performed by the text-mining system shown in Fig. 6.

Fig. 8 is an exemplary clustering graph that may be produced using the system and method shown in Figs. 6 and 7.

Fig. 9 is an exemplary clustering histogram that may be produced using the system and method shown in Figs. 6 and 7.

Fig. 10 is an exemplary change-detection method that may be performed by the text-mining system shown in Fig. 6.

Fig. 11 is an exemplary change-detection method for use with a wind fleet or wind farm that may be performed by the text-mining system shown in Fig. 6.

Fig. 12 is an exemplary graph showing segmentation of a group of wind turbines that may be produced using the text-mining system shown in Fig. 6.

Fig. 13 is an exemplary graph of cluster proximities that may be produced using the text-mining system shown in Fig. 6.

Fig. 14 is an exemplary graph of a top-down model that may be produced using the FSA system shown in Fig. 5.

The embodiments described herein provide approaches for integrated risk, reliability, and financial risk management of wind turbine extended warranties and long-term full-service agreements (FSA's). As discussed herein, several novel statistical, engineering, and actuarial methods are combined to create a system that estimates planned and unplanned costs probabilistically. Further, the embodiments described herein include hardware and software architectures for decision support and risk management of a portfolio of wind turbine extended warranties and service agreements. The herein-described methods are designed to exploit and statistically fuse information being collected about a wind turbine fleet, which includes, but is not limited to including, configuration and supplier data, supplier quality data, geospatial variables, seasonality impacts, turbine condition and performance data, operational variables, usage data, historical databases of services events, task duration, costs, and/or engineering/design based life calculations for existing and new wind turbine designs. The methods described herein are applicable to land-based, near-shore, and offshore wind turbines, alone, in a wind farm, or in a wind fleet. However, it should be understood that components of the systems and/or steps of the methods can be used with other risk management systems. For example, the text-mining system described herein can be used to create model to be used with any suitable simulator and/or system.

In one embodiment, a computer program is provided, and the program is embodied on a computer-readable medium. In an exemplary embodiment, the system is executed on a computer system including a server. Alternatively, the system is executed on a single computer system, without requiring a connection to a sever computer. In a further exemplary embodiment, the system is run in a Windows® environment (Windows is a registered trademark of Microsoft Corporation, Redmond, Washington). In yet another embodiment, the system is run on a mainframe environment and a UNIX® server environment (UNIX is a registered trademark of AT&T located in New York, New York). The application is flexible and designed to run in various different environments without compromising any major functionality. In some embodiments, the system includes multiple components distributed among a plurality of computing devices. One or more components may be in the form of computer-executable instructions embodied in a computer-readable medium. The systems and processes are not limited to the specific embodiments described herein. In addition, components of each system and each process can be practiced independent and separate from other components and processes described herein. Each component and process can also be used in combination with other risk management systems and processes.

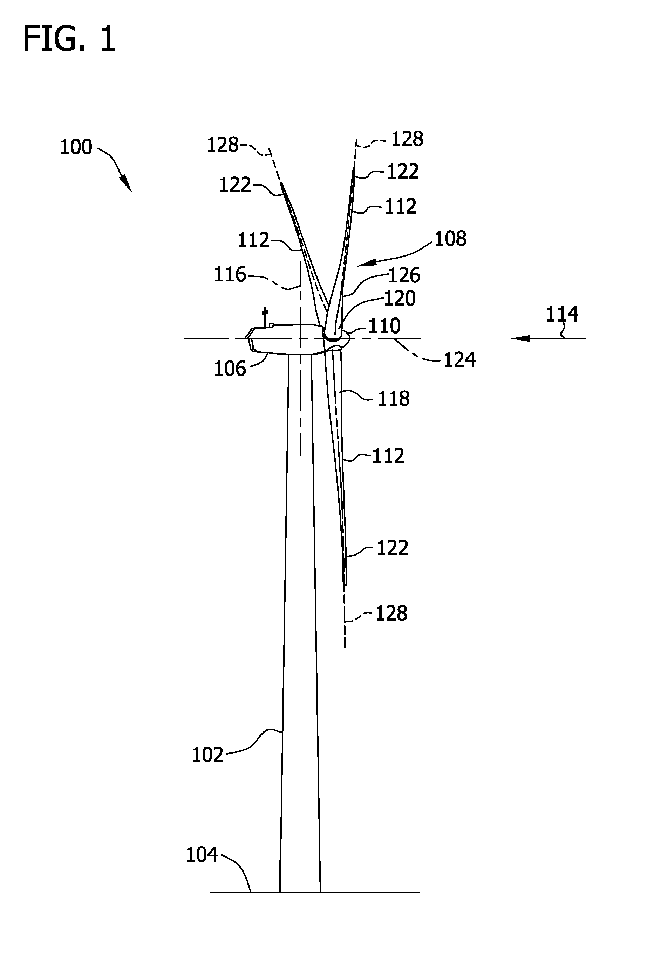

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower 102 extending from and coupled to a supporting surface 104. Tower 102 may be coupled to surface 104 with anchor bolts or via a foundation mounting piece (neither shown), for example. A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any suitable number of rotor blades 112 that enables wind turbine 100 to function as described herein. Tower 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective of rotor blades 112 with respect to a direction of wind 114.

Rotor blades 112 are mated to hub 110 by coupling a rotor blade root portion 118 to hub 110 at a plurality of load transfer regions 120. Load transfer regions 120 each have a hub load transfer region and a rotor blade load transfer region (both not shown in Fig. 1). Loads induced to rotor blades 112 are transferred to hub 110 via load transfer regions 120. Each rotor blade 112 also includes a rotor blade tip portion 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, lift forces are induced to rotor blade 112 and rotation of rotor 108 about an axis of rotation 124 is induced as rotor blade tip portion 122 is accelerated.

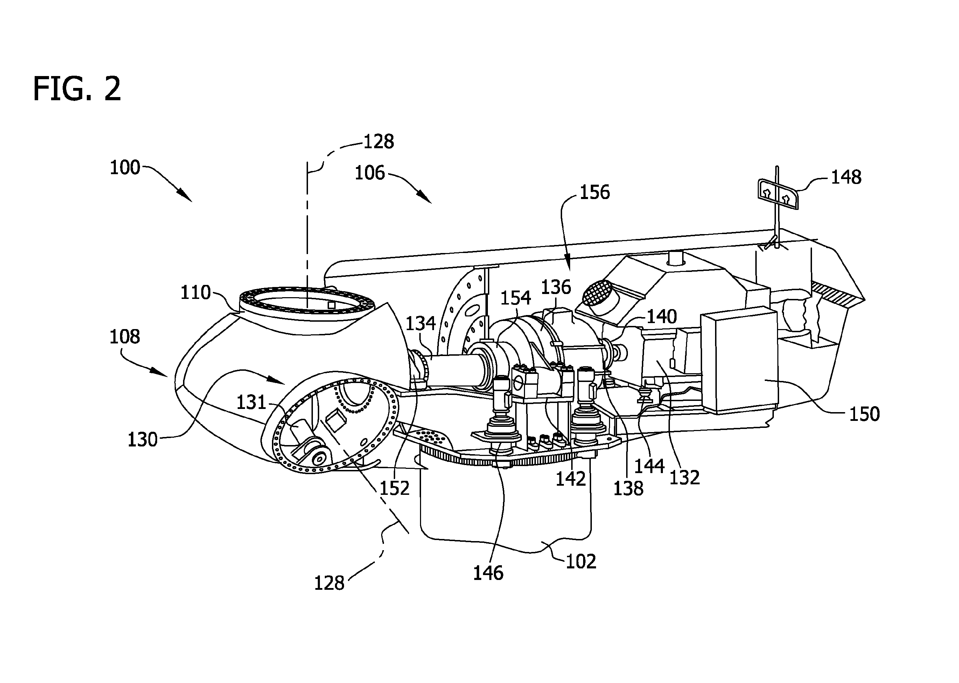

A pitch angle (not shown) of rotor blades 112, i.e., an angle that determines the perspective of rotor blade 112 with respect to the direction of wind 114, may be changed by a pitch assembly 130 (shown in Fig. 2). More specifically, increasing a pitch angle of rotor blade 112 decreases an amount of rotor blade surface area 126 exposed to wind 114 and, conversely, decreasing a pitch angle of rotor blade 112 increases an amount of rotor blade surface area 126 exposed to wind 114. The pitch angles of rotor blades 112 are adjusted about a pitch axis 128 at each rotor blade 112. In the exemplary embodiment, the pitch angles of rotor blades 112 are controlled individually.

Fig. 2 is a partial sectional view of nacelle 106 used with wind turbine 100. In the exemplary embodiment, various components of wind turbine 100 are housed in nacelle 106. For example, in the exemplary embodiment, nacelle 106 includes pitch assemblies 130. Each pitch assembly 130 is coupled to an associated rotor blade 112 (shown in Fig. 1), and modulates a pitch of an associated rotor blade 112 about pitch axis 128. In the exemplary embodiment, each pitch assembly 130 includes at least one pitch drive motor 131.

Moreover, in the exemplary embodiment, rotor 108 is rotatably coupled to an electric generator 132 positioned within nacelle 106 via a rotor shaft 134 (sometimes referred to as either a main shaft or a low speed shaft), a gearbox 136, a high speed shaft 138, and a coupling 140. Rotation of rotor shaft 134 rotatably drives gearbox 136 that subsequently drives high speed shaft 138. High speed shaft 138 rotatably drives generator 132 via coupling 140 and rotation of high speed shaft 138 facilitates production of electrical power by generator 132. Gearbox 136 is supported by a support 142 and generator 132 is supported by a support 144. In the exemplary embodiment, gearbox 136 uses a dual-path geometry to drive high speed shaft 138. Alternatively, rotor shaft 134 may be coupled directly to generator 132 via coupling 140.

Nacelle 106 also includes a yaw drive mechanism 146 that rotates nacelle 106 and rotor 108 about yaw axis 116 to control the perspective of rotor blades 112 with respect to the direction of wind 114. Nacelle 106 also includes at least one meteorological mast 148, such as a wind vane and/and anemometer (neither shown in Fig. 2). In one embodiment, meteorological mast 148 provides information, including wind direction and/or wind speed, to a turbine control system 150. Further, pitch assembly 130 is operatively coupled to turbine control system 150.

Turbine control system 150 includes one or more controllers or other processors configured to execute control algorithms. Further, many of the other components described herein include a controller and/or processor. As used herein, the term "processor" includes any programmable system including systems and microcontrollers, reduced instruction set circuits (RISC), application specific integrated circuits (ASIC), programmable logic circuits (PLC), and any other circuit capable of executing the functions described herein. The above examples are exemplary only, and thus are not intended to limit in any way the definition and/or meaning of the term processor. Moreover, turbine control system 150 may execute a supervisory, control and data acquisition (SCADA) program.

It should be understood that a processor and/or control system can also include memory, input channels, and/or output channels. In the embodiments described herein, memory may include, without limitation, a computer-readable volatile medium, such as a random access memory (RAM), and/or a computer-readable nonvolatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels may include, without limitation, sensors and/or computer peripherals associated with an operator interface, such as a mouse and a keyboard. Further, in the exemplary embodiment, output channels may include, without limitation, a control device, an operator interface monitor, and/or a display.

Processors and/or controllers described herein process information transmitted from a plurality of electrical and electronic devices that may include, without limitation, sensors, actuators, databases, servers, control systems, and/or monitoring devices. Such processors may be physically located in, for example, a control system, a sensor, a monitoring device, a desktop computer, a laptop computer, a PLC cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). The execution of sequences of instructions is not limited to any specific combination of hardware circuitry and software instructions

In the exemplary embodiment, nacelle 106 also includes forward support bearing 152 and aft support bearing 154. Forward support bearing 152 and aft support bearing 154 facilitate radial support and alignment of rotor shaft 134.

Forward support bearing 152 is coupled to rotor shaft 134 near hub 110. Aft support bearing 154 is positioned on rotor shaft 134 near gearbox 136 and/or generator 132. Nacelle 106 may include any number of support bearings that enable wind turbine 100 to function as disclosed herein. Rotor shaft 134, generator 132, gearbox 136, high speed shaft 138, coupling 140, and any associated fastening, support, and/or securing device including, but not limited to, support 142, support 144, forward support bearing 152, and aft support bearing 154, are sometimes referred to as a drive train 156.

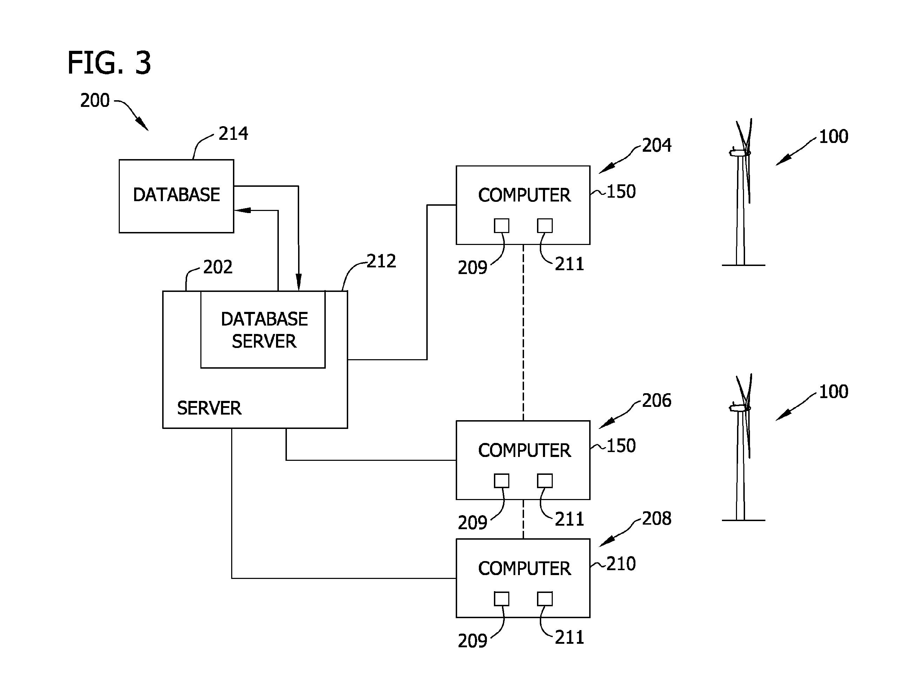

Fig. 3 is a simplified block diagram of an exemplary computer system 200 that may include at least one turbine control system 150. Computer system 200 is a risk management system, which can be utilized to monitor and calculate risks and/or costs of at least one wind turbine, such as wind turbine 100 (shown in Figs. 1 and 2). In the exemplary embodiment, computer system 200 is used with a wind farm or fleet that includes a plurality of wind turbines 100; however, it should be understood that computer system 200 can be used with a single wind turbine 100.

Computer system 200 includes a server system 202, and a plurality of client sub-systems, also referred to as client systems 204, 206, and 208, connected to server system 202. Each client system 204 and 206 includes turbine control system 150, and client system 208 includes a user-accessible computer 210. Each client system 204, 206, and 208 include a memory device and a processor, such as a memory device 209 and a processor unit 211.

Memory device 209 is an example of a storage device. As used herein, a storage device is any piece of hardware that is capable of storing information either on a temporary basis and/or a permanent basis. Memory device 209 may be, for example, without limitation, a random access memory and/or any other suitable volatile or nonvolatile storage device. Further, memory device 209 may take various forms depending on the particular implementation, and memory device 209 may contain one or more components or devices. For example, memory device 209 may be a hard drive, a flash memory, a rewritable optical disk, a rewritable magnetic tape, and/or some combination of the above. The media used by memory device 209 also may be removable. For example, without limitation, a removable hard drive may be used for memory device 209. A storage device, such as memory device 209, may be configured to store data for use with the processes described herein. For example, a storage device may store one or more software applications (e.g., including source code and/or computer-executable instructions) such as a virtual machine and/or other software application and/or any other information suitable for use with the methods described herein.

Processor unit 211 executes instructions for software that may be loaded into memory device 209. Processor unit 211 may be a set of one or more processors or may include multiple processor cores, depending on the particular implementation. Further, processor unit 211 may be implemented using one or more heterogeneous processor systems in which a main processor is present with secondary processors on a single chip. In another embodiment, processor unit 211 may be a homogeneous processor system containing multiple processors of the same type.

Instructions for the operating system and applications or programs are located on memory device 209. These instructions may be loaded into memory device 209 for execution by processor unit 211. The processes of the different embodiments may be performed by processor unit 211 using computer implemented instructions and/or computer-executable instructions, which may be located in a memory, such as memory device 209. These instructions may be referred to as program code (e.g., object code and/or source code) that may be read and executed by a processor in processor unit 211. The program code in the different embodiments may be embodied on different physical or tangible computer readable media, such as memory device 209.

Program code may be located in a functional form on one or more storage devices (e.g., memory device 209, a persistent memory, and/or a computer-readable medium) that are selectively removable and may be loaded onto or transferred to client system 204, 206, and/or 208 for execution by processor unit 211. In one example, the computer-readable media may be in a tangible form, such as, for example, an optical or magnetic disc that is inserted or placed into a drive or other device that is part of memory device 209 for transfer onto a storage device, such as a hard drive that is part of memory device 209. In a tangible form, the computer-readable media also may take the form of a hard drive, a thumb drive, or a flash memory that is connected to client system 204, 206, and/or 208. The tangible form of the computer-readable media is also referred to as computer-recordable storage media. In some instances, the computer-readable media may not be removable.

Alternatively, the program code may be transferred to client system 204, 206, and/or 208 from the computer-readable media through a communications link and/or through a connection to an input/output unit. The communications link and/or the connection may be physical or wireless in the illustrative examples. The computer-readable media also may take the form of non-tangible media, such as communications links or wireless transmissions containing the program code. In some illustrative embodiments, the program code may be downloaded over a network to memory device 209 from another computing device or computer system for use within client system 204, 206, and/or 208. For instance, program code stored in a computer-readable storage medium in a server computing device may be downloaded over a network from the server to client system 204, 206, and/or 208. The computing device providing the program code may be a server computer, a workstation, a client computer, or some other device capable of storing and transmitting the program code.

The program code may be organized into computer-executable components that are functionally related. For example, the program code may include a virtual machine, a software application, a hypervisor, and/or any component suitable for the methods described herein. Each component may include computer-executable instructions that, when executed by processor unit 211, cause processor unit 211 to perform one or more of the operations described herein.

The different components illustrated herein for client systems 204, 206, and/or 208 are not meant to provide architectural limitations to the manner in which different embodiments may be implemented. The different illustrative embodiments may be implemented in a computer system including components in addition to or in place of those illustrated for client systems 204, 206, and/or 208. For example, other components shown in the figures can be varied from the illustrative examples shown. As one example, a storage device in client system 204, 206, and/or 208 is any hardware apparatus that may store data. Memory device 209, the persistent storage, and the computer-readable media are examples of storage devices in a tangible form In the exemplary embodiment, computerized modeling and clustering tools, as described below in more detail, are stored in server system 202 and can be accessed by an authorized requester at any client system 204, 206, and/or 208 and, more particularly, computer 210. In one embodiment, client systems 204, 206, and 208 are each computers including a web browser, such that server system 202 is accessible to client systems 204, 206, and 208 using the Internet. Client systems 204, 206, and 208 are interconnected to the Internet through many interfaces including a network, such as a local area network (LAN) or a wide area network (WAN), dial-in-connections, cable modems, and special high-speed ISDN lines. Client systems 204, 206, and/or 208 could be any device capable of interconnecting to the Internet including any suitable web-based connectable equipment. Although client system 208 is described as being separate from server system 202 and database 214, it should be understood that server system 202 and/or database 214 can be integrated into client system 208.

A database server 212 is connected to a database 214, which contains information on a variety of wind turbine operation variables, risk variables and/or cost variables, as described below in greater detail. In one embodiment, centralized database 214 is stored on server system 202 and can be accessed by potential users using at least client system 208 by logging onto server system 202 through at least client system 208. In an alternative embodiment, database 214 is stored remotely from server system 202 and/or may be non-centralized. Database 214 may store monitoring data, maintenance data, wind turbine specification data, risk data, and/or cost data generated from inputs from client systems 204, 206, and/or 208 and/or inputs by operators of computer system 200.

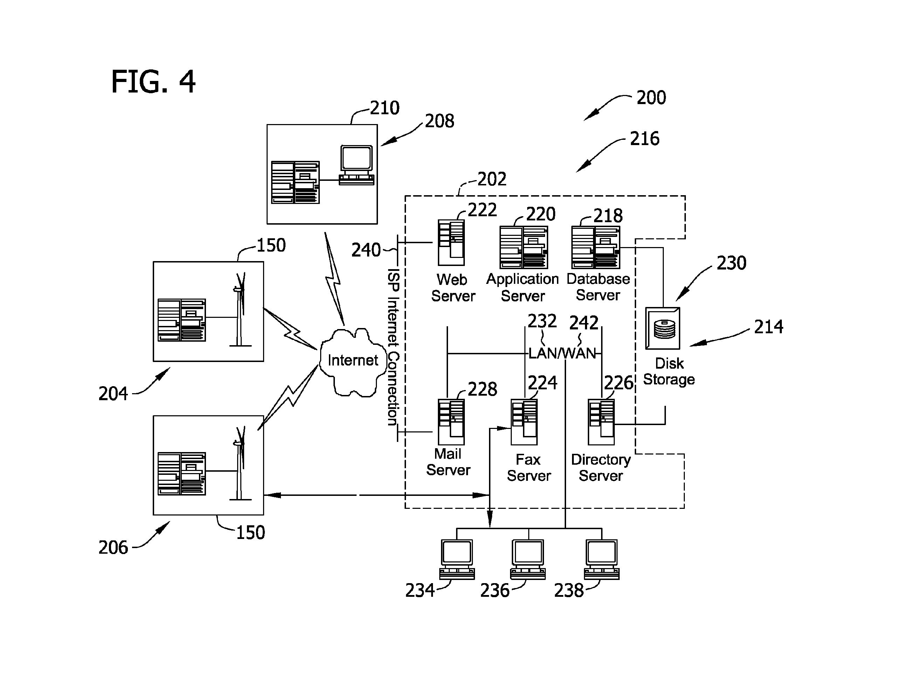

Fig. 4 is an expanded block diagram of an exemplary embodiment of a server architecture of a system 216 in accordance with one embodiment of the present invention. Components in system 216 that are identical to components of computer system 200 (shown in Fig. 3) are identified in Fig. 4 using the same reference numerals as used in Fig. 3. System 216 includes server system 202 and client systems 204, 206, and 208. Server system 202 further includes database server 218, an application server 220, a web server 222, a fax server 224, a directory server 226, and a mail server 228. A disk storage unit 230 is coupled to database server 218 and directory server 226. Servers 218, 220, 222, 224, 226, and 228 are coupled in a LAN 232. In addition, a system administrator's workstation 234, a user workstation 236, and/or a supervisor's workstation 238 can be coupled to LAN 232. Alternatively, workstations 234, 236, and/or 238 can be coupled to LAN 232 using an Internet link or are connected through an intranet.

Server system 202 is configured to be communicatively coupled to various individuals and/or systems, including client systems 204, 206, and 208, using an ISP Internet connection 240. The communication in the exemplary embodiment is illustrated as being performed using the Internet, however, any other WAN-type communication can be utilized in other embodiments, i.e., the systems and processes are not limited to being practiced using the Internet. In addition, and rather than WAN 242, local area network 232 could be used in place of WAN 242.

The methods described below are performed to analyze the risks and/or costs associated with warranties and/or service agreements for at least one wind turbine 100 (shown in Figs. 1 and 2). The methods described herein are performed by server system 202, clients systems 204, 206, and/or 208, and/or database 214 sending information, commands, and/or instructions to each other and/or other components of systems 200 and 216. In a particular embodiment, server system 202 and/or computer 210 is programmed with code segments configured to perform the herein-described methods. Alternatively, the methods are encoded on a computer-readable medium that is readable by server system 202 and/or computer 210. In such an embodiment, server system 202 and/or computer 210 is configured to read computer-readable medium for performing at least one of the herein-described methods. In the exemplary embodiment, at least one method is automatically performed continuously and/or at selected times. Alternatively, a method is performed upon request of an operator of system 200 and/or 216 and/or when server system 202 and/or computer 210 determines at least one method described herein is to be performed.

In illustrative examples, the data and information used by server system 202 and/or computer 210 may be supplied and accepted through sensors in wind turbine 100, through an input device, from database 214, from control system 150, and/or supplied directly to server system 202 and/or computer 210. Exemplary data and information utilized by server system 202 and/or computer 210 is described in some detail below, but in an exemplary embodiment, server system 202 and/or computer 210 includes text mining capabilities to cluster failure modes in historic and real-time service records and modeling capabilities to determine a risk or a cost of a warranty or service agreement. Server system 202 and/or computer 210 may generate detailed reports in which risk and/or cost of one of more wind turbines may be analyzed in an objective manner across a number of aspects. Analysis information may be made available in varying degrees of detail, and may be presented in graphical form. The data and information supplied to server system 202 and/or computer 210 may be stored or archived in database 214, and the data and information may be accessed by server system 202 and/or computer 210 to permit a reliable assessment, evaluation, and/or analysis of risks and/or costs associated with a warranty, a service agreement, and/or a portfolio of warranties and/or service agreements.

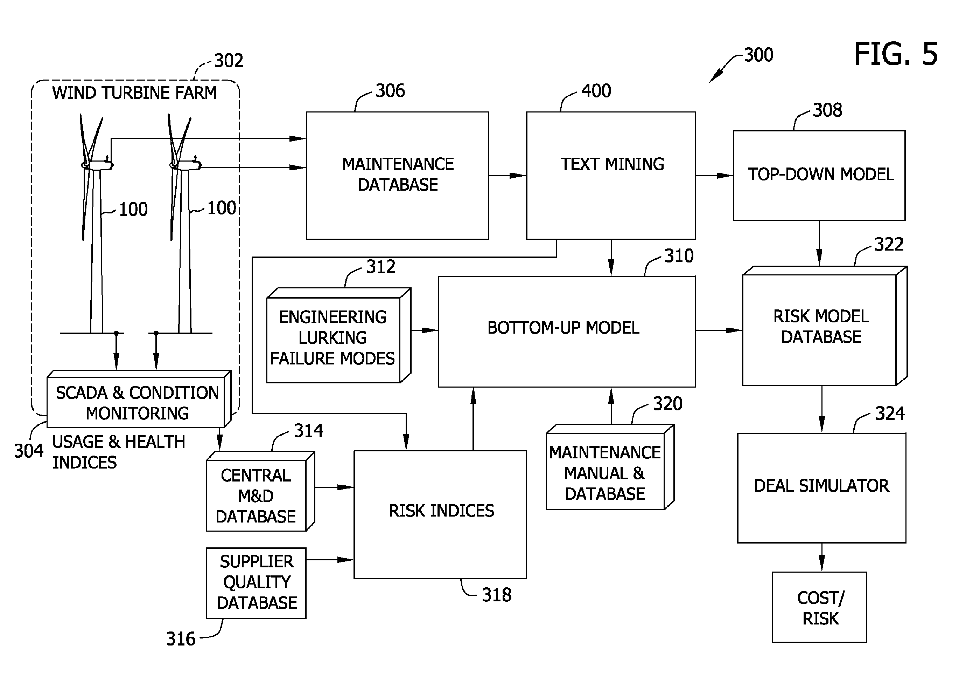

Fig. 5 is a schematic view of an exemplary FSA system 300 that may be implemented using systems 200 and 216 (shown in Figs. 3 and 4). In the exemplary embodiment, FSA system 300 includes a SCADA and condition monitoring system 304, a maintenance database 306, a text-mining system 400, a top-down simulator 308, a bottom-up simulator 310, a lurking failure modes system 312, a central database 314, an quality database 316, a risk indices system 318, a manual database 320, a risk model database 322, and a deal simulator system 324.

In the exemplary embodiment, condition monitoring system 304 and maintenance database 306 receive data from at least one wind turbine 100. More specifically, condition monitoring system 304 receives usage and health information from a plurality of wind turbines 100, and maintenance database 306 receives information regarding repairs, inspections, part replacement, task duration, costs, logistics, and/or any other suitable maintenance data. Data is transferred from condition monitoring system 304 to central database 314, and data is transferred from maintenance database 306 to text-mining system 400.

Text-mining system 400 performs text-mining analysis of the maintenance data, such as event classification, clustering, peer group identification and segmenting, indentifying emerging issues, and/or generating an alert regarding emerging issues. Text-mining system 400 outputs results, such as a baseline failure model, to top-down simulator 308, bottom-up simulator 310, and risk indices system 318. Top-down simulator 308 includes event frequencies, event severities, and/or a top-down model simulation engine, outputs results of a simulation to risk model database 322. Bottom-up simulator 310 further receives data from lurking failure modes system 312, risk indices system 318, and manual database 320 and outputs data to risk model database 322. More specifically, bottom-up simulator 310 performs a component-level model simulation of event frequency (i.e. repairs, replacements, and/or inspections) and severity (i.e. cost and/or duration) for observed issues and lurking failure modes and outputs results of the simulation to risk model database 322.

In addition to receiving output from text-mining system 400, risk indices system 318 receives data from central database 314 and quality database 316. Risk indices system 318 generates a plurality of different indices that produce adders for use in bottom-up simulator 310 outputs adders to bottom-up simulator 310. Risk model database 322 checks and/or analyzes outputs from top-down simulator 308 and bottom-up simulator 310 and outputs results to deal simulator 324. More specifically, risk model database 322 includes a model checker, risk models, cost handbooks, and/or scenarios. Deal simulator 324 analyzes the data from risk model database 322 and outputs a risk and/or cost of at least one FSA contract and/or FSA deal. In the exemplary embodiment, deal simulator 324 includes a simulation engine, an optimizer, a forecaster, metrics, and/or reporting that can be used to generate an output to a user.

In the exemplary embodiment, FSA system 300 performs a method that includes collecting data from a plurality of wind turbines 100, such as a fleet or a farm, by continuously monitoring performance parameters using monitoring system 304 and/or collecting data from databases 306 that include records of all maintenance activities performed on wind turbines 100. The maintenance or service records include, for example, task type, verbal description in free text format, details of repairs, inspections, part replacements, activity time, and/or costs involved.

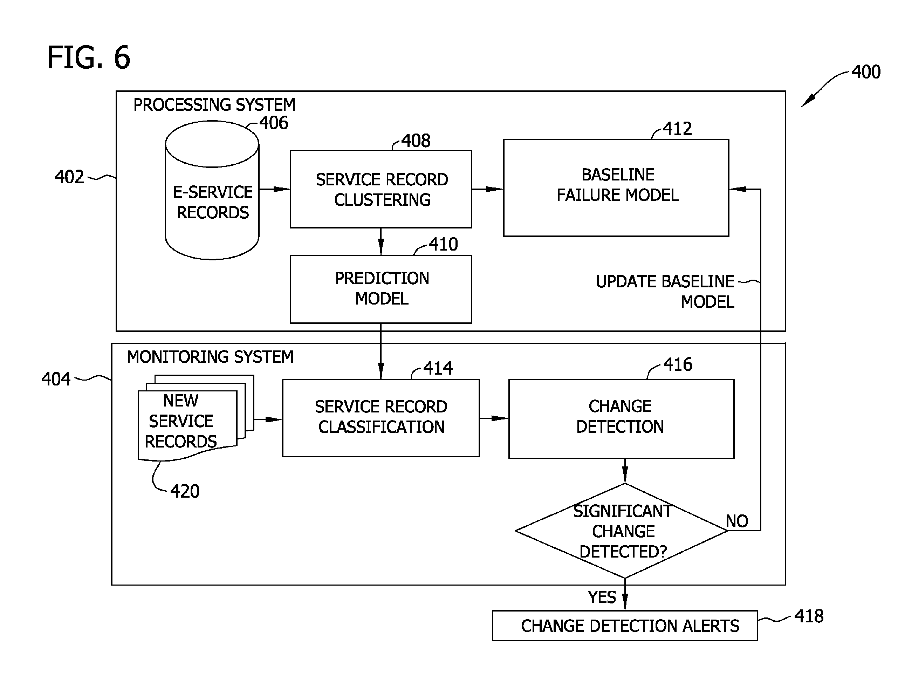

The wind turbine information is collected for the monitored wind turbines 100, and an artificial-intelligence-based text-mining algorithm system 400 automatically processes unstructured free text information, including customer and service comments, to identify groups of similar service events that have similar topics, such as blade repair due to lightning strikes, dirty gearbox oil replacement, and/or any other suitable topics. These groups of service events can be further categorized based on taxonomy of wind turbine systems including, without limitation, a gearbox category, a pitch system category, a balance-of-plant category, and/or any other suitable category. In addition to classification of events into topics and/or categories, an age of occurrence of each event and/or any additional variables useful for calculation of top-down and bottom-up models are estimated. Finally a real-time, data-stream-based text-monitoring system of text-mining system 400 is used to detect emerging issues, such as new failure modes, new types of repair activities, and to detect a significant change in failure rates of individual topics and/or categories. Outputs relevant for actuarial modeling, such as events for each identified category and/or age of turbine at event, from text-mining system 400 are used in two calculation engines - top-down simulator 308 and bottom-up simulator 310. Text-mining system 400 is described in more detail in Figs. 6-14, below.

Fig. 6 is a schematic diagram of an exemplary text-mining system 400 for use with FSA system 300 (shown in Fig. 5). Text-mining system 400 is configured to output results, such as a model, to a second system, such as a simulator 308 and/or 310 (shown in Fig. 5), risk indices system 318 (shown in Fig. 5), and/or any other suitable system. Text-mining system 400 includes a processing system 402 and a monitoring system 404. In the exemplary embodiment, processing system 402 is configured to identify failure categories from historic service records 406 and corresponding reliability models for fleet and wind farm levels. More specifically, processing system 402 includes a clustering system 408, a prediction model 410, and a baseline model 412. Clustering system 408 is configured to generate clusters of similar services records by extracting key text features from service records 406 using text mining. Failure categories are identified by clustering system 408 based on the clustering of text features. Prediction model 410 and baseline failure model 412 are then generated from the clusters, identified failure categories, and/or failure rates. More specifically, prediction model 410 is then developed to predict a failure category of a given new service record 410. Baseline failure model 412 is developed to show a historical trend, percentage, or rate of types, causes, costs, and/or other failure information. Baseline failure model 412 is a survival model estimated for each failure category using output prediction model 410. Baseline failure model 412 provides a failure rate at an aggregate level across all wind farms and/or fleets. In a particular embodiment, baseline failure model 412 is output from text-mining system 400 to any suitable second system to perform a risk and/or cost assessment.

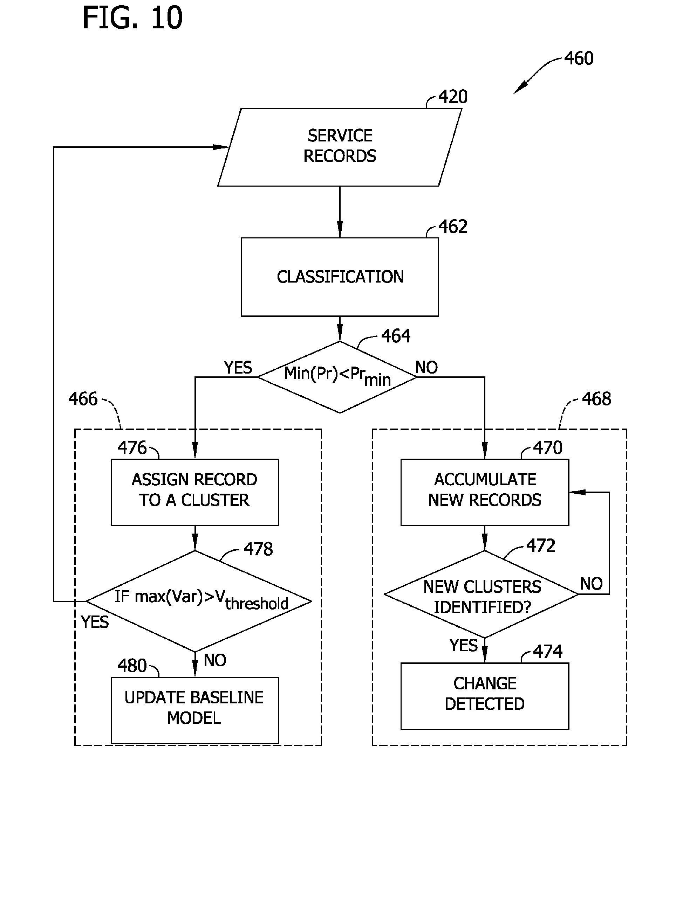

Monitoring system 404 includes a classification system 414, a change detection system 416, and an alert system 418. Classification system 414 is configured to categorize or classify new service records 420 and detect emerging issues. The categorization of service records 420 is done based on prediction model 410 that was developed using historical service records 406. Exemplary categorization methods performed by classification system 414 are described in more detail with respect to Figs. 10-12. In the exemplary embodiment, classification system 414 is configured to classify each new service record 420 into an identified failure category of prediction model 410. If a new service record 420 does not fit within one of the identified failure categories, the service record is held as unclassified. In the exemplary embodiment, each new service record 420 is compared to a threshold probability of new service record 420 belonging to each failure category of prediction model 410 to determine whether a service record 420 fits within a particular failure category or whether the service record 420 does not fit within any existing failure category.

Change detection system 416 is configured to analyze the unclassified service records and either assign the service record to an identified failure category or create a new failure category to which a plurality of unclassified services records can be assigned. Further, change detection system 416 can also detect a change in a failure rate. For example, change detection system 416 detects whether a particular type of failure is occurring more or less frequently than modeled. Baseline failure model 412 of processing system 402 can be updated using the changes detected by change detection system 416. Further, alert system 418 can issue an alert that a new failure category has been created or should be created by an operator.

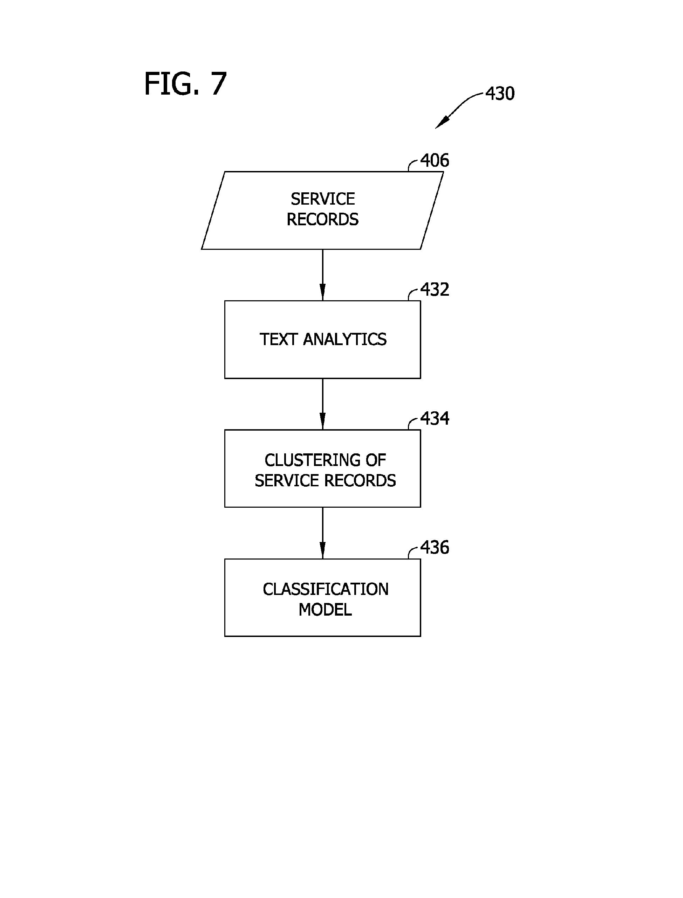

Fig. 7 is a flowchart of an exemplary classification method 430 performed by text-mining system 400 (shown in Fig. 6) using, for example, processing system 402. Referring to Figs. 6 and 7, in the exemplary embodiment, problem summary text in services records 406 and/or 410 from wind turbines 100 (shown in Fig. 5) describes, for example, symptoms of a failure and a service performed. The text in service records 406 and/or 410 is unstructured text, which can be noisy with variations in spelling, grammatical construction, and other textual features. Text-mining-based analytics are performed 432 by, for example, clustering system 408, to identify key features from the text. In a particular embodiment, text-mining-based analytics include performing 432 a series of steps, such as language processing and/or Singular Value Decomposition (SVD) based algorithms, to convert unstructured text data into appropriate numeric features. More specifically, the collection of texts from past service records 406 is processed through various language processing techniques, such as stemming, phrase analysis, and/or natural language processing, to identify significant features in the texts. A bag-of-words matrix is constructed in which each column is a keyword and each row records occurrence of the keywords in a given service record 406.

Additional dimension reduction can be achieved by performing singular value decomposition (SVD) on a bag of words matrix A with n rows of service records and p columns of keywords, as follows:

$$A_{[n \times p]} = U_{[n \times r]} \, D_{[r \times r]} \, (V_{[m \times r]})' \qquad \text{Eq. (1)}$$

The terms in a matrix U measure similarity between individual records to q concepts or groups, and a matrix V identifies a relationship of individual terms to the q groups. Diagonal elements of a matrix D represent a strength of selected r concepts to which the data is compressed, where r number of concepts is less than p number of keyword columns. The matrix U obtained from singular values is used as an input to a clustering algorithm 434 to identify failure modes in the data. In a particular embodiment, clustering algorithms, such as model-based clustering (mixture model clustering) and k-mediod clustering, are used to identify the failure modes in the data.

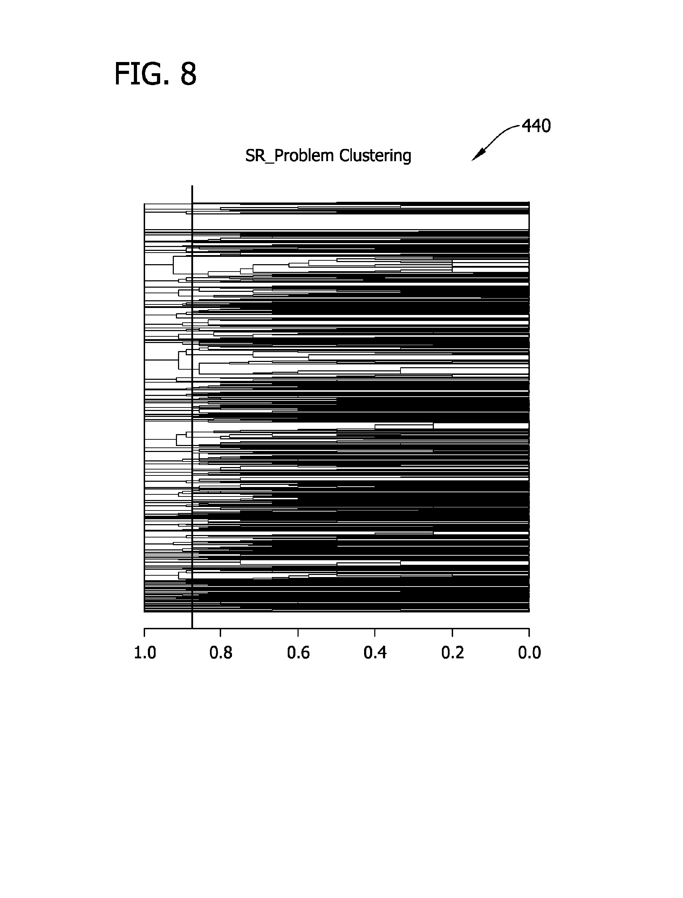

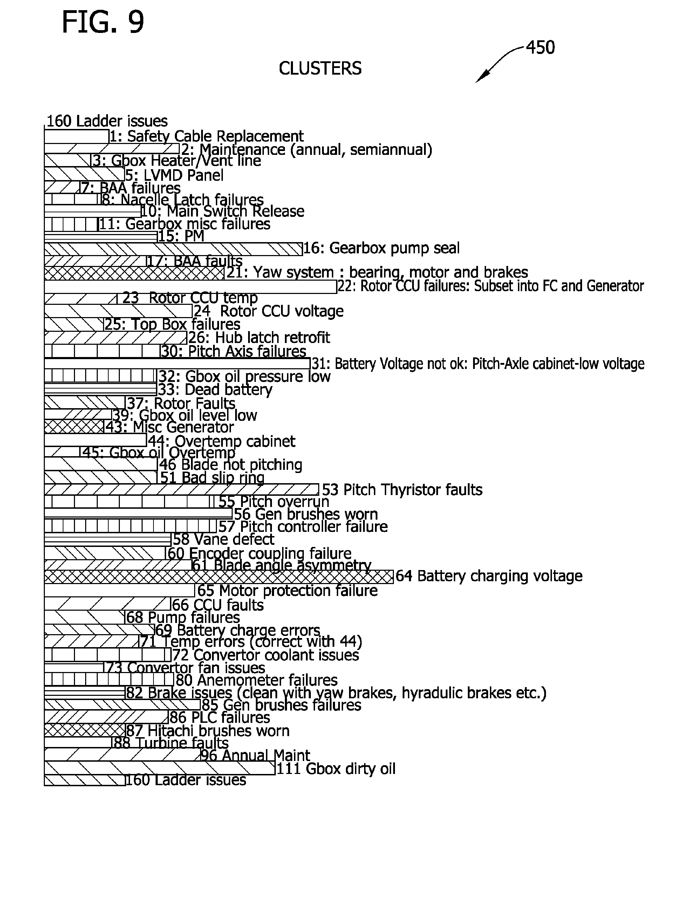

A classification or prediction model 410, such as a support vector machine (SVM), is developed 436 using the matrix U and other service information, such as parts consumed, to assign a new service record 420 to a failure category. Figs. 8 and 9 illustrate the clustering methodology and sample failure categories identified.

Fig. 8 is an exemplary clustering graph 440 that may be produced using text-mining system 400 (shown in Fig. 6) and method 430 (shown in Fig. 7). Fig. 9 is an exemplary clustering histogram 450 that may be produced using system 400 and method 430. Graph 440 and histogram 450 show hierarchical clustering of service records 406 (shown in Fig. 6) based on SVD of text of a problem description in each service record 406. Further, an association between significant terms in a failure category can be visualized in which a width (thickness) of a line connecting terms is proportional to a magnitude of the association.

Fig. 10 is an exemplary change-detection method 460 that may be performed by text-mining system 400 (shown in Fig. 6) using, for example, monitoring system 404 (shown in Fig. 6). More specifically, method 460 classifies and analyzes clusters to identify new failure modes or categories. Referring to Figs. 6 and 10, method 460 performs real-time monitoring that classifies new service records 420 into existing failure categories and detects new failure categories. More specifically, service records 420 that do not correspond to existing failure categories identify emerging issues. Further, for each of the existing failure categories, significant changes in failure rates, in a wind fleet and/or a wind farm, are determined based on comparison with baseline failure rates estimated during failure categorization.

Method 460 identifies a probability of a new service record belonging any of the existing clusters and identifies emerging clusters. More specifically, method 460 classifies 462 each new service record 420 by, for example, determining a distance between a service record and existing clusters and comparing the service record to a threshold. Prediction model 410 provides a vector of probabilities $Pr_{1xC}$ of a given service record belonging to any of the known C failure clusters. As used herein, "Pr" is the probability that "1xC" denotes a vector with C number of elements. The probabilities are compared 464 to a threshold of a minimum probability to belong to any category, $Pr_{min}$. Method 460 includes two sub-methods - a classification and failure mode monitoring sub-method 466 and a failure rate change monitoring sub-method 468 - that are performed depending on comparison 464.

If for the given service record the maximum observed probability of belonging to any of the clusters in C, max $(Pr_{1xC})<Pr_{min}$, then the service record is not assigned to any category and accumulated 470 separately and failure rate change monitoring sub-method 468 is performed. As used herein, $Pr_{min}$ can be a user-defined threshold or a threshold derived based on historical data. In the exemplary embodiment, service records are accumulated 470 until a new cluster is identified 472. For the accumulated records which are not assigned to any existing clusters, periodic re-clustering is performed to identify 472 new failure clusters. If new failure clusters are identified 472, an alert is generated 474 for new failure cluster and baseline failure model 412 is updated 474 to include the new failure cluster.

If for the given service record max(Pr)>$Pr_{min}$, the service record is assigned 476 to a cluster with the maximum probability. As new service records 420 are classified to existing failure clusters, also referred to as failure categories, a quality of these clusters is estimated 478 in terms of variance in similarity between members, such as cumulative mean square standard deviation. Thresholds for variance, $V_{threshold}$, are derived based on estimating the noise/randomness in the data using historical data as input with no trends/emerging issues. A maximum variance maximum variance, max (Var), in the similarity between members is compared to the variance thresholds, $V_{threshold}$, to indicate changes for a given failure rate. Any significant change for a given failure category represents a change in a distribution of its members, and baseline failure model 412 is updated 480 to reflect the change of a failure category. The failure categories and/or failure rates in baseline failure model 412 are used to run simulations in top-down simulator 308 (shown in Fig. 5) and bottom-up simulator 310 (shown in Fig. 5).

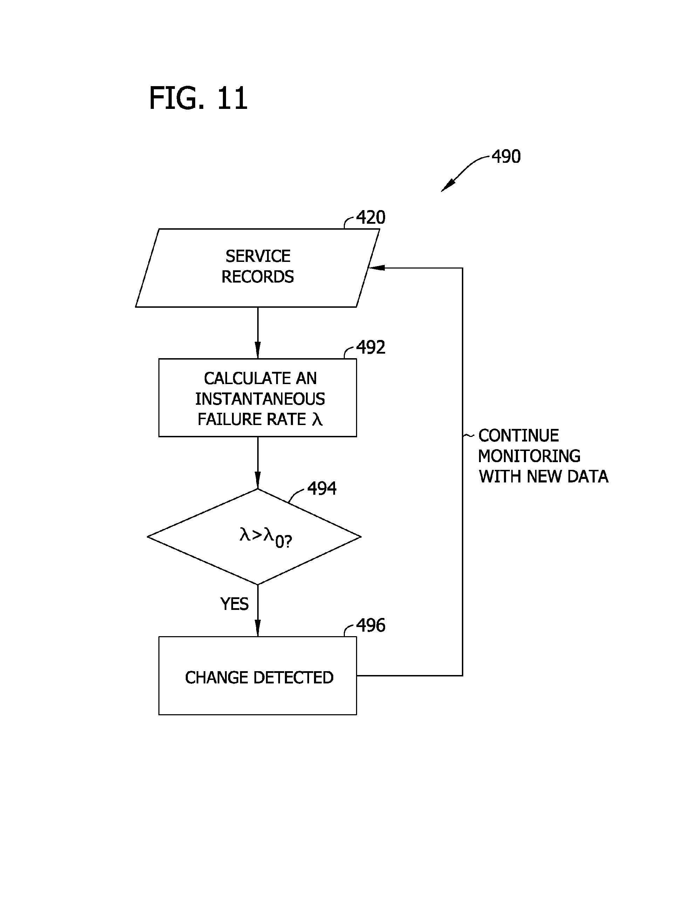

Fig. 11 is an exemplary change-detection method 490 that may be performed by text-mining system 400 (shown in Fig. 6). Method 490 detects change based on comparing failure rates in data with baseline failure rates in baseline failure model 412 (shown in Fig. 6). Method 490 can be used for a wind fleet and/or a wind farm.

Method 490 is used for a wind fleet or a wind farm and includes calculating 492 for each time period $k$, the instantaneous failure rates $\lambda_{(c, k)}$ for each failure type (i.e. failure category) $c$ at a fleet level, or farm level, after a new service record 420 occurs. The instantaneous fleet level failure rate $\lambda_{(c, k)}$ is compared 494 to a baseline failure rate $\lambda_{0(c, k)}$ as a series of hypothesis tests. If the instantaneous fleet level failure rate $\lambda_{(c, k)}$ is greater than the baseline failure rate $\lambda_{0(c, k)}$, an increase in failure rate is detected 496. When the increase is detected 496, an alert is created for an increased failure rate for cluster c. Monitoring system 404 (shown in Fig. 6) continues monitoring new service records 420. This change detection incorporates effects of ageing, fleet-level operational parameters, and environmental parameters in baseline model 412. A decrease in failure rate is also useful information and can indicate, for example, that fleet wide deployment of a new design gearbox has reduced risk of failure.

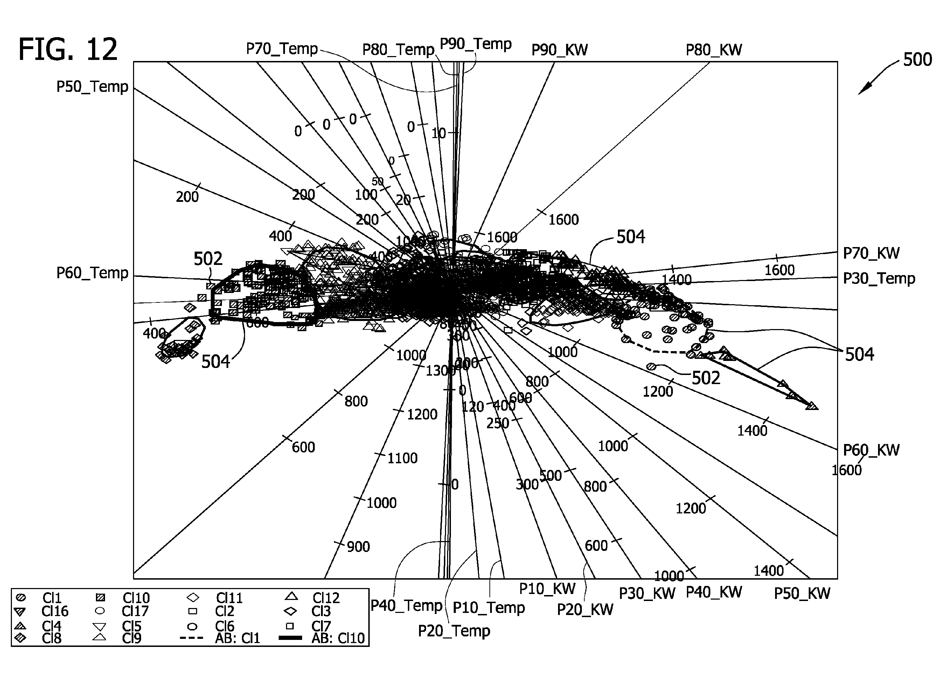

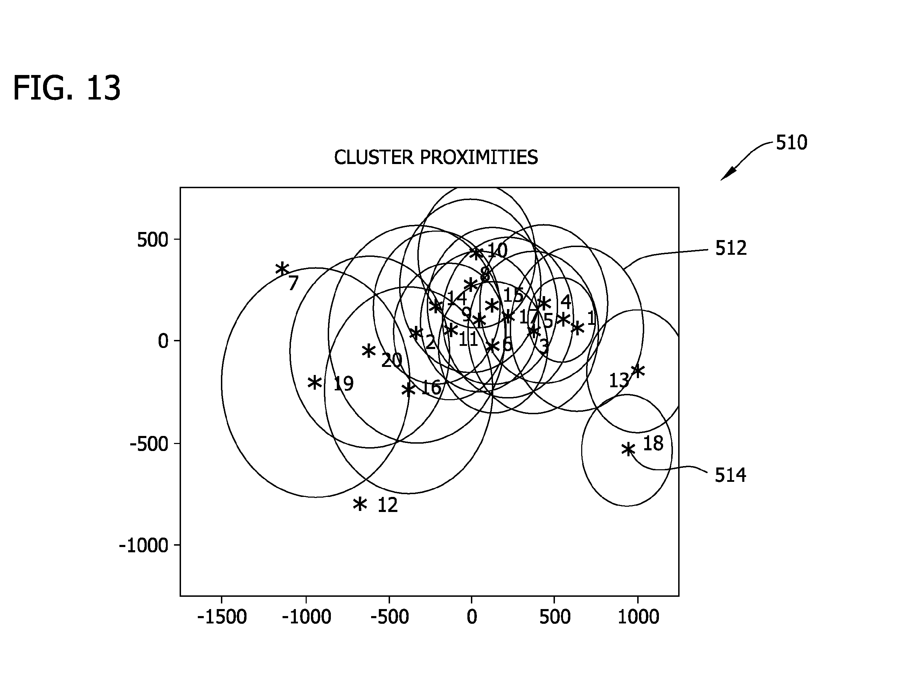

Referring again to Fig. 5, another application of text-mining system 400 performs a peer analysis when needed or desired. For example, text-mining system 400 segments wind turbines based on environmental and operational parameters to identify groups of wind turbines and/or wind farms with similar characteristics to perform the peer analysis. Results from the peer analysis are used in risk indices system 318 to provide a baseline for developing adders to turbine-level frequency/severity models. The peer group segmentation is based on ambient temperature, wind speed, and/or power measurements for an individual wind turbine measured over its lifetime. A mixture-model-based clustering assumes that data is obtained from a mixture of clusters each having unique distribution characteristics. An expectation maximization (EM) based method is used to identify a number of clusters and distribution parameters of the clusters. Based on segments and/or clusters identified in the segmentation models shown in Figs. 12 and 13, a frailty-based reliability model is used to estimate a failure rate for each segment by incorporating excess risk associated with each of the segments and/or clusters.

More specifically, Equation 2 is used to estimate a failure rate for each segment.

$$\lambda_i = \lambda(0) * \exp(\omega Z_i) \qquad\qquad Eq. (2)$$

where, $\omega$ is the coefficient for random effect representing excess risk for the cluster and $\lambda_i$ is the failure intensity for farm $I$, $\lambda(0)$ is a baseline failure rate for the farm, and $Z_i$ is a corresponding design matrix. Equation 2 uses both ageing related parameters and site or farm specific risks to estimate the expected failure rate for a given segment. The output of Equation 2 can be used in risk indices system 318 in the creation of geospatial risk indices or can be estimated or used separately from risk indices system 318.

Fig. 12 is an exemplary graph 500 showing segmentation of a group of wind turbines that may be produced using text-mining system 400 (shown in Fig. 6). More specifically, graph 500 illustrates wind turbine segments based on distributions of temperature, wind speed, and power. Graph 500 includes a plot of points 502 for each failure category. Each failure category has its own corresponding point type. Regions 504 are drawn to cluster groups of points 502 of one failure category. Regions 504 indicate clusters of failure modes.

Fig. 13 is an exemplary graph 510 of cluster proximities that may be produced using text-mining system 400 (shown in Fig. 6). More specifically, graph 510 illustrates a multidimensional scaling plot showing distance between clusters. Graph 510 includes elliptical shapes 512 indicating clusters and points 514 represent an average value, or center, of a respective cluster.

Referring to again to Fig. 5, top-down simulator 308 receives results, such as failure categories and/or failure rates in baseline failure model 412 (shown in Fig. 6), from text-mining system 400 to build a turbine-level distribution model of FSA-impacting events (i.e. frequency models) and their associated costs (i.e. severity models). As such, the distribution model includes frequency models and severity models. The frequency models are not specific to a component but aggregate all events into a non-homogenous Poisson process (NHPP) model with a nonlinear growth intensity function, for example, generalized logistic, Gompertz, Mixture-Weibull, Mixture-Normal, MMF, and/or other suitable functions, to predict event frequency. Event severities are modeled by, for example, Mixture-Weibull or Mixture-Lognormal/Gamma distributions. Correlation between event frequencies and severity distributions are empirically estimated using Copula functions, for example, Archimedean or Gaussian Copulas.

A Monte Carlo simulation is used to generate several thousand events and their costs over the anticipated duration of the FSA and this provides a current or baseline model for costs and events and acts as a point of reference and a check against results generated by other algorithms, such as bottom-up simulator 310. Top-down simulator 308 also provides a baseline for developing event adders that are an output from risk indices system 318.

In the exemplary embodiment, results from text-mining system 400 are passed to top-down simulator 308 calculation engine. In top-down simulator 308, a single aggregate model of claims is developed, in the form of a NHPP with intensity, following a variety of models depending on a turbine being analyzed and a quality of the available claims data. The general form of the NHPP model is shown in Eq. (3),

$$P(N(t) = n) = \frac{1}{n!}\left(\int_0^t \lambda(x)dx\right)^n \exp\left(\int_0^t \lambda(x)dx\right), \qquad n=1, 2, \ldots \qquad (Eq. 3)$$

where $P(N(t)=n)$ is the probability of seeing exactly $n$ unplanned maintenance events at time $t$ and the cumulative event intensity $\Lambda(t) = \int_0^t \lambda(x)dx$ can be directly calculated by sampling from a mixture of normal distributions as shown in Eq. (4).

$$F(\Lambda(t)) = \sum \omega_i \left[\int_{-\infty}^x \frac{1}{\sigma\sqrt{2\pi}} \exp\left(-\frac{(x - \mu_i(t))^2}{2\sigma_i^2}\right)dx\right] \qquad\qquad Eq. (4)$$

where $\omega_i$ is the i-th fraction of the mixture, x is a random variable generated from Equation 4 by assuming $F(\Lambda(t))$ is a uniformly distributed random number between 0 and 1, and $\sigma_i$, and $\mu_i$ are a standard deviation and a mean, respectively, of each of the normal distributions that make up the mixture shown in Equation 4. In the exemplary embodiment, $\omega_i$ is a number between 0 and 1 such that all $\omega$'s sum to 1. To use Equation 4, a random number is generated to see which "mixture component" will be used, and then another random number is generated to generate random number x, which is drawn from the mixture component that was chosen.

Intensity function $\lambda(t)$ is the intensity function of an underlying Non-Homogenous Poisson Process. Integrating intensity function $\lambda(t)$ over time gives a cumulative intensity. Intensity function $\lambda(t)$ can be approximated by a nonlinear growth model, such as the models shown below in Equations 5-9. In the exemplary embodiment, top-down simulator 308 automatically picks the best option depending on the field data and goodness of fit criteria.

$$\text{The Richard's model, } \lambda(t) = \frac{\alpha}{\left[1 + \exp(\beta - k \cdot t)\right]^{\frac{1}{\delta}}} \qquad \text{Eq. (5)}$$

$$\text{Weibull model, } \lambda(t) = \alpha - \beta \cdot \exp\left(-k \cdot t^{\delta}\right) \qquad \text{Eq. (6)}$$

$$\text{Gompertz model, } \lambda(t) = \alpha \cdot \exp\left(-\exp(\beta - k \cdot t)\right) \qquad \text{Eq. (7)}$$

$$\text{Morgan-Mercer-Flodin model, } \lambda(t) = \frac{\alpha\beta + k \cdot t^{\delta}}{\beta + t^{\delta}} \qquad \text{Eq. (8)}$$

$$\text{Logistic model, } \lambda(t) = \frac{\alpha}{1 + \beta \cdot \exp(-k \cdot t)} \qquad \text{Eq. (9)}$$

The parameters $\alpha$, $\beta$, k, and $\delta$ of the above-listed growth models are estimated from available event data from the wind turbine group, and the NHPP model can be used to generate a stream of discrete random numbers at any required time t as part of the Monte Carlo simulation.

For a given Monte Carlo trial, if the code generates k events, then k random numbers will be drawn from the event cost, or aggregate severity, distribution. The sum of these k costs will be the cumulative costs for that Monte Carlo trial at that time. The two-mixture Weibull distribution is used to model the distribution of claim costs C as shown in Equation 10, where model parameters $\rho$, $\eta_1$, $\beta_1$, $\eta_2$ and $\beta_2$ are estimated from field claims cost data.

$$F(c < C) = \rho \cdot \exp\left[-\left(\frac{C}{\eta_1}\right)^{\beta_1}\right] + (1 - \rho) \cdot \exp\left[1\left(\frac{C}{\eta_2}\right)^{\beta_2}\right] \qquad \text{Eq. (10)}$$

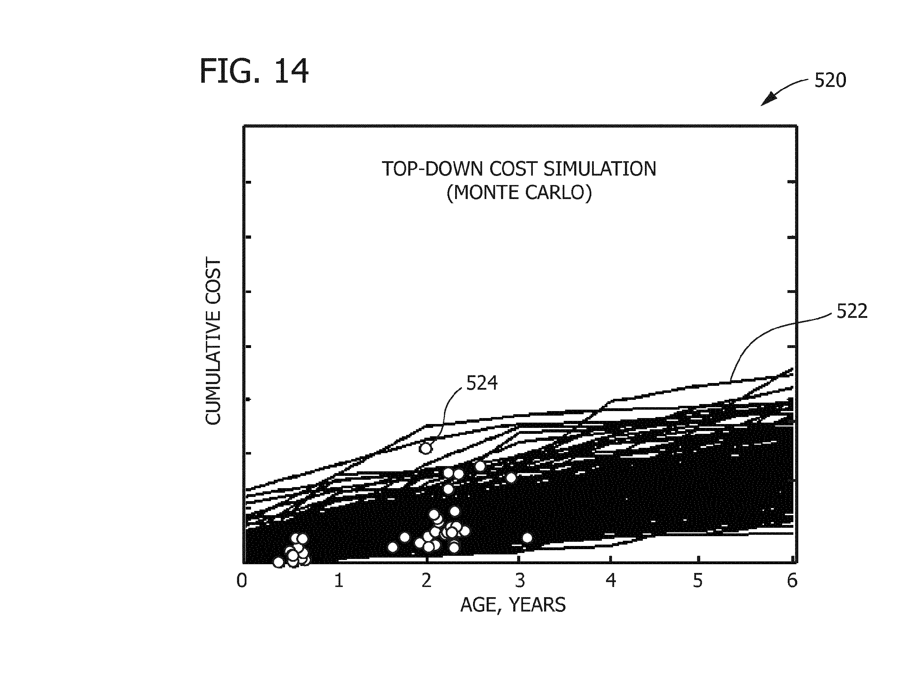

Fig. 14 is an exemplary graph 520 of a distribution model that may be produced using FSA system 300 (shown in Fig. 5). More specifically, graph 520 illustrates typical results of top-down simulator 308 (shown in Fig. 5) superimposed on representative claim costs over time. Lines 522 are generated from a simulation performed by top-down simulator 308, and circles 524 indicate claim costs from field data. In the exemplary embodiment, top-down simulator 308 aggregates results from several thousand Monte-Carlo trials and calculates the statistics of the final cost distribution. The statistics calculated from the distribution model include, without limitation, an average, a standard deviation, skewness, range, percentiles, value-at-risk, and conditional tail expectation.

Referring again to Fig. 5, bottom-up simulator 310 uses inputs from text-mining system 400, risk indices system 318, and manual database 320 depending on the component being analyzed, to generate an extrapolation model. For example, bottom-up simulator 310 receives baseline failure model 412 (shown in Fig. 6) from text-mining system 400. In the exemplary embodiment, wind turbine 100 is decomposed into the following N sub-systems for analysis: base frame, balance of plant, brake, coupling, frequency converter, gearbox, generator, hub, low-voltage main distribution (LVMD), main bearing, main control cabinet, nacelle, obstruction light, pitch system, rotor blade, rotor shaft, SCADA, slip ring transformer, top cabinet, tower PC, tower structure, transformer, turbine control system, wind measurement, yaw system, and undetermined/miscellaneous. Each sub-system may be further decomposed into major or minor systems, depending on the data available for that component.

Individual event frequency and cost (severity) models are developed for each of the N sub-systems using several estimation methods, including a Weibull-mixture-renewal algorithm that mathematically decomposes an empirically observed cumulative hazard rate into a renewal component, a repair component, and a unit-specific excess risk component. To generate the Weibull-mixture-renewal algorithm, a simple closed-form approximation to a single Weibull-based renewal solution is built and the approximation is expanded to include any type of mixture-distribution or even combination of distributions. A closed-form or series approximation of a Renewal-Weibull model is initially developed, which provides a "forward" solution, and the same model and algorithm can then be used to estimate the "inverse solution". More specifically, an empirically observed solution is initially determined and, by working backwards, underlying model parameters are determined. This is done using a combination of optimization methods, from gradient-search techniques to evolutionary optimization (e.g. genetic algorithms). Once the coefficients of the individual event models are identified, accurate risk projections can be made, allowing for extrapolation beyond the range of raw data. As such, bottom-up simulator 310 provides an advantage over classical statistical and/or actuarial methods that can be trusted only within the range of observed data.

In the exemplary embodiment, bottom-up simulator 310 begins by decomposing turbine 100 into the N sub-systems. Each claim and/or event is assigned a numerical code depending on the sub-system to which it is assigned. For each sub-system, an age at event, total costs (which are a combination of parts costs, labor hours, and/or logistics costs), and a rank of events in ascending order by age (from the newest event to the oldest event) are calculated. For each event $j$, a number of units in a fleet $R_j$ that have exceeded the age based on turbine operation history at event $t_j$ is estimated. A cumulative number of events per turbine at time $t_j$, $H(t_j)$, can be approximated by Equation 11:

$$H(t_j) = H(t_{j-1}) + \left( \frac{1}{R_j} \right) \qquad \text{(Eq. 11)}$$

Typically each wind turbine 100 generates a large number of events and, thus, an effect of suspensions in the data on cumulative number $H(t_j)$ is negligible. However, a bias correction factor can be used to account for wind turbines 100 in the fleet or farm with no events. As used herein, the term "suspensions" refers to data points at which a unit has operated to some time but has not produced any events of interest (failure, repair events).

After a non-parametric cumulative events-per-turbine curve is obtained, the curve is approximated by a parametric fleet or farm model. More specifically, the curve is obtained from Equation 11 and calculated separately for each of the individual sub-systems, such as gearboxes, generators, grequency converters, and/or any other subsystem. It is assumed that an observed cumulative event estimate from fleet data $H(t_j)$ is a mixture of a pure renewal process, in which parts that fail are replaced by identical parts that are as good as new, and a non-homogenous Poisson process, in which a part is restored to as bad as old. More specifically, in the non-homogenous Poisson process, a sub-system is restored to an operating condition during an event, but no service life is recovered from the maintenance activity.

Fleet event model parameters are estimated as the mixture-Weibull parameters or individual Weibull parameters for each component, or in some cases, the Non-Homogenous Poisson Process model parameters or the model parameters for the model shown in Equation 12. Once the fleet event model parameters are estimated, unique conditions under which wind turbine 100 is operating are accounted for or compensated for as adders. The adders $A(t)$ are included as modifiers in an underlying base statistical distribution, such as a Weibull distribution for event renewals, and are calculated by risk indices system 318.

A model that is used in a discrete-event simulation of unplanned events takes is shown in Equations 12-16 below. In the exemplary embodiment, the model is calculated for each subsystem, respectively.

$$H(t) \cong H'(t) = \rho M(t) + (1 - \rho)\Lambda(t) \qquad\qquad \text{Eq. (12)}$$

$$\Lambda(t) = \int_0^t \lambda(x)dx \qquad\qquad \text{Eq. (13)}$$

$$M(t) = F(t) + \int_{x=0}^{x=t} M(t - x)dF(x) \qquad\qquad \text{Eq. (14)}$$

$$F(t) = \sum_{i=1}^{i=k} \omega_i \left( 1 - \exp\left( -\left( \frac{A(t) \cdot t}{\eta_i} \right)^{\beta_i} \right) \right), \qquad \sum \omega_i = 1 \qquad \text{Eq. (15)}$$

$$\ln\left[A(t)\right] = \alpha_1 \cdot SQI(t) + \alpha_2 \cdot SI(t) + \alpha_3 \cdot GRI(t) + \alpha_4 \cdot TUI(t) + \alpha_5 \cdot THI(t) \quad \text{Eq. (16)}$$

The model described in Equations 12-16 is complex and algorithms have been developed to estimate parameters $\rho$, $\eta_1 ... \eta_k$, $\beta_1 ... \beta_k$, $\omega_1 ... \omega_k$ and to model parameters included in a cumulative event intensity $\Lambda(t)$ using cumulative number $H(t)$, which is obtained directly from field data for each sub-system. The cumulative event intensity $\Lambda(t)$ is a cumulative event intensity of the underlying event-generation process, usually a Non-Homogenous Poisson Process. A form of $\Lambda(t)$ can be chosen from any the functional forms shown in Equations 5-9, though Equation 6 is most commonly used in practice. A variety of optimization algorithms, such as gradient search methods and evolutionary optimization techniques (i.e. genetic algorithms), are used in estimating optimal mixture splits, the model parameters, and uncertainties associated with the model parameters.

The model coefficients in Equation 16 are not estimated from cumulative number $H(t)$ or from field claims data, but are determined separately from turbine operating data, and are described in more detail with respect to risk indices system 318. Finally, the severity (cost) distribution for each sub-system is calculated. The cost is divided into three components corresponding to part costs, labor hour costs, and logistics costs. Parts costs, labor hour costs, and logistics costs are modeled using single or finite-mixture Lognormal or Gamma distributions. The cost components are highly correlated, especially at the tails of the distributions, and the components' correlation structure is modeled using Copula functions. All model parameters are estimated from service records for each sub-system of each wind turbine 100.

Still referring to Fig. 5, FSA system 300 incorporates lurking issues, which are failure modes or risks that have not been observed in field data, using lurking failure modes system 312. More specifically, lurking failure modes system 312 uses a Monte-Carlo Bayesian algorithm that combines engineering and/or physics-based life calculations with observed Weibull shape parameters to provide models for lurking issues. Such models provide a financial cushion against adverse issues which may occur in future years. All planned maintenance activities are obtained from the electronic maintenance manual database 320 by bottom-up simulator 310, and are sub-system specific.

In the exemplary embodiment, risk indices system 318 is configured to incorporate several turbine specific "risk adders" that are not manifested in available field data or that are smoothed over when averaging over large fleets or farms. More specifically, risk indices system 318 receives turbine condition data, configuration and location data, weather data, and/or data from manufacturing quality databases. Risk indices system 318 increases or decreases a number of events that would be generated in a discrete event simulation. Risk indices system 318 facilitates "personalizing", or tailoring, a model for a particular wind farm or turbine. Outputs from risk indices system 318 are used to calculate a positive or negative deviation of risk from baseline failure model 412 ("deviant risk") and to account for the externalities, such as a supplier quality index (SQI), a seasonality index (SI), a turbine usage index (TUI), a turbine health index (THI), and a geospatial risk index (GRI). The deviant risk is used to generate adders for use in bottom-up simulator 310. Risk indices are used in Equation 12 and are explicitly named in Equation 16.

The SQI provides a numerical score and is calculated for all key subsystem suppliers for key items. For example, the SQI is calculated for major vendors for gearboxes, generators, frequency converters, pitch systems, and/or rotor blades. The SQI is used to flag emerging or known quality issues from a specific supplier which can act as a risk concentrator in the FSA portfolio. The SI is a numerical score used to model an impact of the seasons (i.e. spring, summer, fall, and winter) on the failure rate and/or repair rate of a component. It is empirically known that certain mechanical components, for example, gearboxes and/or blades, are likely to have a higher number of events in colder weather due to dense air, and electronics components, such as frequency converters, are likely to have reliability issues in the summer, especially in hot and humid environments. The SI is highly correlated with the geospatial location of wind turbine 100 and the correlation is modeled using specific rules that associate certain geographical regions with specific seasonality indices or statistical methods, such as Copulas.

The TUI is a measure of excess usage of a particular turbine when compared to its peers. More specifically, the TUI is estimated from a combination of energy produced, operating hours per year, capacity factor, emergency stops, and/or other suitable variables. The THI is an aggregate measure of the health of a turbine and is compared to its own health index and to healths of the turbine's peers. To construct the THI, baseline reference healthy values are obtained for several monitored parameters, such as power as function of wind speed, coefficients of an empirical power curve for each turbine, torque, currents, voltages, drivetrain vibration features (i.e. peak-to-peak signal, root mean square, kurtosis, and/or crest factor for a gearbox, a main bearing, and/or generator bearings), strain gage measurements at critical locations on a turbine rotor blade and tower, and/or other suitable parameters. More specifically, reference healthy values are measured after a turbine "wear-in" period of between 3 months and 4 months, which is the time usually required to eliminate most installation and tuning issues. Health values are then tracked for a few weeks to establish a baseline reading. For new designs, "ideal" healthy values can be generated by using the performance simulation data for a unit operating in the region of interest. A standardized or normalized value of the obtained healthy parameters is calculated. A number of healthy parameters is reduced from 100 or more parameters to less than parameters using a combination of principal components analysis (PCA) and/or factor rotation. The THI is a score generated by data fusion algorithms using less than 10 principal components and/or factors.

The GRI includes a measure of excess risk based on the geospatial location of the wind farm. The GRI takes into account effects that are unique to a location of wind turbine 100 and not captured by seasonality or usage. In addition to wind speed, turbulence intensity, wind shear, air density, and/or maintenance factors, effect of country type, terrain, weather extremes, general accessibility, infrastructure, country/location's level of general development, and/or economic variables are modeled using novel algorithms that estimate the deviant risk as a function of geospatial information. The GRI considers the physical location of a turbine and its interaction with other turbines in the same vicinity.

Outputs from top-down simulator 308, bottom-up simulator 310, and manual database 320 are stored in risk model database 322. In the exemplary embodiment, risk model database 322 includes a model structure in the form of equations, model coefficients and their uncertainties (i.e. standard deviations and/or a correlation matrix), model measures of goodness of fit (i.e. likelihood ratios, Bayes information criterion, and/or Akaike Information Criterion (AIC), version history of previous models, cost handbook tables (i.e. a list of drawing numbers and task types with associated costs and task duration), logistics models (i.e. time to mobilize cranes, trucks, and/or crews based on a particular maintenance activity), a list of scenarios that the main discrete event simulation model described in Equations 12-16 would cycle through to generate a report, and/or any other suitable information. Most of the commonly occurring scenarios are captured via a Monte Carlo simulation performed by deal simulator 324 and are not stored in risk model database 322. Special extreme and/or rare scenarios are included risk model database 322. The special scenarios include a combination of technical risks, such as new designs and/or supply chain shocks, and financial and/or geopolitical risks, such as escalations in labor rates, availability of people, foreign exchange risk, and/or political risk.

FSA system 300 further includes deal simulator 324 that includes a specialized stochastic simulation and optimization software configured to generate a cost associated with a FSA contract and/or deal. In the exemplary embodiment, deal simulator 324 accesses the models stored in risk model database 322 and receives user inputs that are specific to a deal being evaluated. Deal simulator 324 performs hundreds of thousands of Monte Carlo time-dependent histories of maintenance events, such as planned maintenance events, unplanned maintenance events, repairs, replacements, and/or inspections, and aggregates the maintenance events into industry-standard risk measures of performance (i.e. value-at-risk, risk-adjusted return-on-capital, and/or conditional tail expectation) and calculates percentiles of events and costs as a function of a length of the FSA agreement, for example, one year.

For a portfolio of FSA contracts and/or deals that have already been evaluated by FSA system 300, deal simulator 324 can re-evaluate underlying risks and costs of the portfolio by performing simulations that take into account changing variables, such as technical variables and/or economic/commercial variable, and calculating a variance between a value of the deal when the deal was signed and what the deal is currently worth. Deal simulator 324 is further configured to forecast costs and risks for a remainder of the FSA contract and to optimize values of deductibles, caps, contract length, and/or terms and conditions to meet a given risk profile.

In the exemplary embodiment, the calculations are performed by text-mining system 400, top-down simulator 308, bottom-up simulator 310, risk indices model 318, risk model database 322, and/or deal simulator 324 using specialized software running in a central location on system 200 and/or 216 (shown in Figs. 3 and 4). The calculations performed by monitoring system 304 and risk indices system 318 at the turbine level running on code embedded in SCADA or control hardware of each wind turbine 100. The risk indices for turbine usage and turbine health are performed at each wind turbine 100 in SCADA boxes and/or a controller coupled to wind turbine 100. Alternatively, the components of FSA system 300 perform calculations at any suitable location using any suitable component(s) of system 200 and/or 216.

The embodiments described herein facilitate integrating risk, reliability, and financial risk management of wind turbine extended warranties and long-term full-service agreements. More specifically, the above-described systems can estimate planned and unplanned costs probabilistically based on a plurality of variables related to a single wind turbine or a group of wind turbines. The text-mining system described above enables failure categories to be defined base on historic service data and new service data to be classified into the categories. Further, the above-described text-mining system analyzes the new service data for new failure categories. As such, new trends can be recognized and accounted for by the systems described herein.

One technical effect of the systems and methods described herein may include at least one of: (a) analyzing text of historical service records of at least one wind turbine using a text-mining system; (b) generating a prediction model of the text-mining system based on the analysis of the text, the prediction model including a plurality of failure categories; (c) analyzing text of new service records of the at least one wind turbine; and (d) classifying each new service record based on the text analysis of the new service records and the prediction model.

Exemplary embodiments of a risk management system for use with service agreements are described above in detail. The methods and systems are not limited to the specific embodiments described herein, but rather, components of systems and/or steps of the methods may be utilized independently and separately from other components and/or steps described herein. For example, the methods may also be used in combination with other systems and methods, and are not limited to practice with only the wind turbine systems and methods as described herein. Rather, the exemplary embodiment can be implemented and utilized in connection with many other warranty and/or service agreements and/or deals.

Embodiments described herein may be performed using a computer-based or computing-device-based operating environment as described below. A computer or computing device may include one or more processors or processing units, system memory, and some form of non-transitory computer-readable media. Exemplary non-transitory computer-readable media include flash memory drives, hard disk drives, digital versatile discs (DVDs), compact discs (CDs), floppy disks, and tape cassettes. By way of example and not limitation, computer-readable media comprise computer storage media and communication media. Computer-readable storage media are non-transitory and store information such as computer-readable instructions, data structures, program modules, or other data. Communication media typically embody computer-readable instructions, data structures, program modules, or other data in a modulated data signal such as a carrier wave or other transport mechanism and include any information delivery media. Combinations of any of the above are also included within the scope of computer-readable media.

Although described in connection with an exemplary computing system environment, embodiments of the invention are operational with numerous other general purpose or special purpose computing system environments or configurations. Examples of well known computing systems, environments, and/or configurations that may be suitable for use with aspects of the invention include, but are not limited to, mobile computing devices, personal computers, server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the figures and described herein. Other embodiments of the invention may include different computer-executable instructions or components having more or less functionality than illustrated and described herein.

Aspects of the invention may transform a general-purpose computer into a special-purpose computing device when configured to execute the instructions described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:

1. A system for use with a risk management system, said system comprising:

   a memory device configured to store data including at least historical service records of at least one wind turbine and new service records of the at least one wind turbine; and

   a processor unit coupled to said memory device, wherein said processor unit comprises a programmable hardware component that is programmed, said processor unit configured to:

      analyze, by a processing system, text of the historical service records to generate a prediction model including a plurality of failure categories; and

      analyze, by a monitoring system, text of the new service records to classify each new service record based on the prediction model.

2. A system in accordance with Clause 1, wherein said processor unit is further configured to generate, by the processing system, clusters from the historical service records based on the text analysis.

3. A system in accordance with any preceding Clause, wherein said processor unit is further configured to determine, by the processing system, failure rates and the plurality of failure categories based on the clusters.

4. A system in accordance with any preceding Clause, wherein said processor unit is further configured to generate, by the processing system, a baseline failure model having the plurality of failure categories and the failure rates.

5. A system in accordance with any preceding Clause, wherein said processor unit is further configured to compare, by the monitoring system, each new service record with the prediction model to classify each new service record into at least one failure category of the plurality of failure categories.

6. A system in accordance with any preceding Clause, wherein said processor unit is further configured to assign, by the monitoring system, a new service record to a particular failure category of the plurality of failure categories when a probability of the new service record belonging to the particular failure category is above a probability threshold.

7. A system in accordance with any preceding Clause, wherein said processor unit is further configured to determine, by the monitoring system, that a new service record is unclassified when a probability of the new service record belonging to any of the plurality of failure categories is below a probability threshold.

8. A system in accordance with any preceding Clause, wherein said processor unit is further configured to accumulate, by the monitoring system, unclassified new service records and create a new failure mode based on the unclassified new service records.

9. A system in accordance with any preceding Clause, wherein said processor unit is further configured to update, by the monitoring system, a baseline failure model of the processing system with the new failure mode.

10. A system in accordance with any preceding Clause, wherein said processor unit is further configured to:

   determine, by the monitoring system, a change in failure rate for at least one failure category of the plurality of failure categories; and

update, by the monitoring system, a baseline failure model of the processing system to include the changed failure rate.

11. A method for use with a risk management system, said method comprising:

analyzing, by a processing system, text of historical service records of at least one wind turbine;

generating, by the processing system, a prediction model of the system based on the analysis of the text, the prediction model including a plurality of failure categories;

analyzing, by a monitoring system, text of new service records of the at least one wind turbine; and

classifying, by the monitoring system, each new service record based on the text analysis of the new service records and the prediction model.

12. A method in accordance with any preceding Clause, wherein generating a prediction model further comprises generating clusters from the historical service records based on the text analysis.

13. A method in accordance with any preceding Clause, wherein generating a prediction model further comprises determining failure rates and the plurality of failure categories based on the clusters.

14. A method in accordance with any preceding Clause, wherein generating a prediction model further comprises generating a baseline failure model having the plurality of failure categories and the failure rates.

15. A method in accordance with any preceding Clause, wherein classifying each new service record further comprises comparing each new service record with the prediction model to classify each new service record into at least one failure category of the plurality of failure categories.

16. A method in accordance with any preceding Clause, wherein classifying each new service record further comprises assigning a new service record to a particular failure category of the plurality of failure categories when a probability of the new service record belonging to the particular failure category is above a probability threshold.

17. A method in accordance with any preceding Clause, wherein classifying each new service record further comprises determining that a new service record is unclassified when a probability of the new service record belonging to any of the plurality of failure categories is below a probability threshold.

18. A method in accordance with any preceding Clause, wherein classifying each new service record further comprises accumulating unclassified new service records and create a new failure mode based on the unclassified new service records.

19. A method in accordance with any preceding Clause, further comprising updating, by the monitoring system, a baseline failure model of the text-mining system with the new failure mode.

20. A method in accordance with any preceding Clause, further comprising:

determining, by the monitoring system a change in failure rate for at least one failure category of the plurality of failure categories; and

updating, by the monitoring system, a baseline failure model of the text-mining system to include the changed failure rate.

**Claims**

1. A system (400) for use with a risk management system (300), said system comprising:

a memory device (209) configured to store data including at least historical service records (206) of at least one wind turbine (100) and new service records (420) of the at least one wind turbine; and

**17**

a processor unit (211) coupled to said memory device, wherein said processor unit comprises a programmable hardware component that is programmed, said processor unit configured to:

analyze, by a processing system (402), text of the historical service records to generate a prediction model (410) including a plurality of failure categories; and

analyze, by a monitoring system (404), text of the new service records to classify each new service record based on the prediction model.

2. A system (400) in accordance with Claim 1, wherein said processor unit (211) is further configured to generate, by the processing system (402), clusters from the historical service records (406) based on the text analysis.

3. A system (400) in accordance with any preceding Claim, wherein said processor unit (211) is further configured to determine, by the processing system (402), failure rates and the plurality of failure categories based on the clusters.

4. A system (400) in accordance with any preceding Claim, wherein said processor unit (211) is further configured to generate, by the processing system (402), a baseline failure model (412) having the plurality of failure categories and the failure rates.

5. A system (400) in accordance with any preceding Claim, wherein said processor unit (211) is further configured to compare, by the monitoring system (404), each new service record (420) with the prediction model (410) to classify each new service record into at least one failure category of the plurality of failure categories.

6. A system (400) in accordance with any preceding Claim, wherein said processor unit (211) is further configured to assign, by the monitoring system (404), a new service record (420) to a particular failure category of the plurality of failure categories when a probability of the new service record belonging to the particular failure category is above a probability threshold.

7. A system (400) in accordance with any preceding Claim, wherein said processor unit (211) is further configured to determine, by the monitoring system (404), that a new service record (420) is unclassified when a probability of the new service record belonging to any of the plurality of failure categories is below a probability threshold.

8. A system (400) in accordance with any preceding Claim, wherein said processor unit (211) is further configured to accumulate, by the monitoring system (404), unclassified new service records (420) and create a new failure mode based on the unclassified new service records.

9. A system (400 in accordance with any preceding Claim, wherein said processor unit (211) is further configured to update, by the monitoring system (404), a baseline failure model (412) of the processing system (402) with the new failure mode.

10. A system (400) in accordance with any preceding Claim, wherein said processor unit (211) is further configured to:

determine, by the monitoring system (404), a change in failure rate for at least one failure category of the plurality of failure categories; and

update, by the monitoring system, a baseline failure model (412) of the processing system (402) to include the changed failure rate.

# FIG. 1

# FIG. 2

EP 2 555 154 A1

FIG. 3

FIG. 4

FIG. 5

EP 2 555 154 A1

# FIG. 6

PROCESSING SYSTEM

E-SERVICE RECORDS — 406

SERVICE RECORD CLUSTERING — 408

BASELINE FAILURE MODEL — 412

PREDICTION MODEL — 410

UPDATE BASELINE MODEL

MONITORING SYSTEM

NEW SERVICE RECORDS — 420

SERVICE RECORD CLASSIFICATION — 414

CHANGE DETECTION — 416

SIGNIFICANT CHANGE DETECTED? — NO

YES

CHANGE DETECTION ALERTS — 418

400

402

404

EP 2 555 154 A1

# FIG. 7

430

406

SERVICE
RECORDS

432

TEXT ANALYTICS

434

CLUSTERING OF
SERVICE RECORDS

436

CLASSIFICATION
MODEL

# FIG. 8

SR_Problem Clustering — 440

# FIG. 9

CLUSTERS ╱─450

160 Ladder issues
1: Safety Cable Replacement
2: Maintenance (annual, semiannual)
3: Gbox Heater/Vent line
5: LVMD Panel
7: BAA failures
8: Nacelle Latch failures
10: Main Switch Release
11: Gearbox misc failures
15: PM
16: Gearbox pump seal
17: BAA faults
21: Yaw system : bearing, motor and brakes
22: Rotor CCU failures: Subset into FC and Generator
23 Rotor CCU temp
24 Rotor CCU voltage
25: Top Box failures
26: Hub latch retrofit
30: Pitch Axis failures
31: Battery Voltage not ok: Pitch-Axle cabinet-low voltage
32: Gbox oil pressure low
33: Dead battery
37: Rotor Faults
39: Gbox oil level low
43: Misc Generator
44: Overtemp cabinet
45: Gbox oil Overtemp
46 Blade not pitching
51 Bad slip ring
53 Pitch Thyristor faults
55 Pitch overrun
56 Gen brushes worn
57 Pitch controller failure
58 Vane defect
60 Encoder coupling failure
61 Blade angle asymmetry
64 Battery charging voltage
65 Motor protection failure
66 CCU faults
68 Pump failures
69 Battery charge errors
71 Temp errors (correct with 44)
72 Convertor coolant issues
73 Convertor fan issues
80 Anemometer failures
82 Brake issues (clean with yaw brakes, hyradulic brakes etc.)
85 Gen brushes failures
86 PLC failures
87 Hitachi brushes worn
88 Turbine faults
96 Annual Maint
111 Gbox dirty oil
160 Ladder issues

# FIG. 10

- 460
- 420 SERVICE RECORDS
- 462 CLASSIFICATION
- 464 Min(Pr)<$Pr_{min}$
  - YES
  - NO
- 466
  - 476 ASSIGN RECORD TO A CLUSTER
  - 478 IF max(Var)>$V_{threshold}$
    - YES
    - NO
  - 480 UPDATE BASELINE MODEL
- 468
  - 470 ACCUMULATE NEW RECORDS
  - 472 NEW CLUSTERS IDENTIFIED?
    - NO
    - YES
  - 474 CHANGE DETECTED

# FIG. 11

490

SERVICE
RECORDS
420

CALCULATE AN
INSTANTANEOUS
FAILURE RATE $\lambda$
492

$\lambda > \lambda_0$?
494

YES

CHANGE DETECTED
496

~ CONTINUE
MONITORING
WITH NEW DATA

FIG. 12

FIG. 13

CLUSTER PROXIMITIES

FIG. 14

TOP-DOWN COST SIMULATION
(MONTE CARLO)

CUMULATIVE COST

AGE, YEARS

EP 2 555 154 A1

Europäisches
Patentamt

European
Patent Office

Office européen
des brevets

# EUROPEAN SEARCH REPORT

Application Number

EP 12 17 8336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/090937 A1 (MOORE GARY [CA] ET AL) 28 April 2005 (2005-04-28) * abstract; figures 1, 2 * ----- | 1-10 | INV. G06Q50/06 G06Q10/06 |
| X | US 2011/049883 A1 (HATCH CHARLES T [US] ET AL) 3 March 2011 (2011-03-03) * abstract; figures 1,2 * ----- | 1-10 | |

TECHNICAL FIELDS
SEARCHED      (IPC)

G06Q

The present search report has been drawn up for all claims

| Place of search | Date of completion of the search | Examiner |
|---|---|---|
| Munich | 6 December 2012 | Peller, Ingrid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 17 8336

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2012

| Patent document cited in search report | | Publication date | Patent family member(s) | | Publication date |
|---|---|---|---|---|---|
| US 2005090937 | A1 | 28-04-2005 | AU BR CA CN EP US WO | 2004285129 A1 PI0415728 A 2542771 A1 1871432 A 1678421 A1 2005090937 A1 2005042971 A1 | 12-05-2005 19-12-2006 12-05-2005 29-11-2006 12-07-2006 28-04-2005 12-05-2005 |
| US 2011049883 | A1 | 03-03-2011 | NONE | | |

EPO FORM P0459

For more details about this annex : see Official Journal of the European Patent Office, No. 12/82